# EUROPEAN PATENT APPLICATION

(11) **EP 4 786 612 A1**
(43) Date of publication of application: **05.08.2026**
(21) Application number: 24872322.3
(22) Date of filing: 25.09.2024
(51) Int. Cl.: C22B 26/12, C22B 1/00, C22B 3/44, C22B 7/00

(54) **LITHIUM RECOVERY METHOD, PRODUCTION METHOD FOR SOLID COMPONENT CONTAINING LITHIUM, AND RECOVERY METHOD FOR LITHIUM**

(30) Priority: 29.09.2023 JP 2023170548
(71) Applicant: Mitsui Kinzoku Company, Limited, Tokyo 141-8584 (JP)
(72) Inventor: NAKAMURA, Kenta, Ageo-shi, Saitama 362-0021 (JP); SASAKI, Takuya, Takehara-shi, Hiroshima 725-0025 (JP)
(74) Representative: Novagraaf Technologies
(86) International application number: PCT/JP2024/034266
(87) International publication number: WO 2025/070536

(57) **Abstract**

A method of the present invention includes: a dissolving step of mixing a compound containing lithium (Li) element and an aqueous liquid to obtain an aqueous lithium solution; a recovery step of recovering a solid component containing lithium (Li) element from the aqueous lithium solution; and a washing step of washing the solid component with an aqueous liquid. The washing step preferably includes n washing stages from a first washing step to an n-th washing step (where n is a natural number of 2 or greater). Also, a waste washing liquid generated in the first washing step is preferably used as the aqueous liquid to be mixed with the compound in the dissolving step. Also, a waste washing liquid generated in a p-th washing step is preferably used as the aqueous liquid to be mixed with the compound in the dissolving step or used to wash the solid component in a (p-m)-th washing step (where p is a natural number of from 2 to n; and m is a natural number of 1 or greater, and less than p).

## Description

### Technical Field

The present invention relates to a method for recovering lithium, a method for producing a solid component containing lithium, and a method for recovering lithium element.

### Background Art

In recent years, secondary batteries have been attracting attention as an effort to prevent global warming by reducing CO₂ emissions. Among them, lithium solid-state batteries including solid electrolytes have been developed as batteries that combine safety and high performance.

However, the developments that have been made so far have mainly been related to improvements in the performance of lithium solid-state batteries and to methods for manufacturing lithium solid-state batteries, and there is still insufficient technological developments regarding, for example, methods for recycling waste lithium solid-state batteries and methods for recycling non-standard materials that cannot be used as products.

Patent Literature 1 proposes a method including disassembling a lithium-ion secondary battery to recover a sulfide-based solid electrolyte, and then dissolving the lithium contained in the sulfide-based solid electrolyte to recover the lithium.

### Citation List

### Patent Literature

Patent Literature 1: JP 2010-40458 A

### Summary of Invention

Although lithium having a certain degree of purity can be recovered by the method described in Patent Literature 1, the lithium has a high impurity content and is therefore unsuitable for reuse as one of the starting materials for solid electrolytes.

Therefore, an objective of the present invention is to provide a method for recovering lithium element with high purity from a compound containing lithium.

The present invention achieves the aforementioned objective by providing a method for recovering lithium, the method including:
a dissolving step of mixing a compound containing lithium (Li) element and an aqueous liquid to obtain an aqueous lithium solution;
a recovery step of recovering a solid component containing lithium (Li) element from the aqueous lithium solution; and
a washing step of washing the solid component with an aqueous liquid.

### Brief Description of Drawings

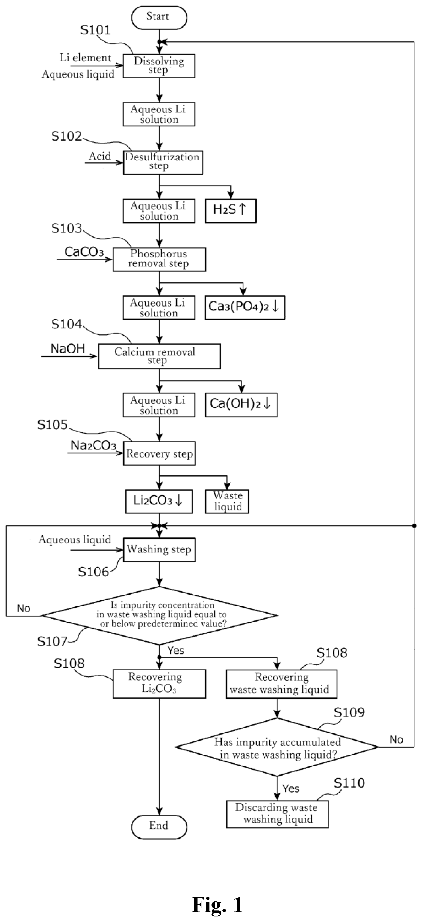

[Fig. 1] Fig. 1 is a flowchart of an embodiment of the method of the present invention.

### Description of Embodiments

The present invention relates to a method for recovering lithium element from a compound containing lithium. The method of the present invention preferably includes the following steps:
a dissolving step of mixing a compound containing lithium (Li) element and an aqueous liquid to obtain an aqueous lithium solution;
a recovery step of recovering a solid component containing Li element from the aqueous lithium solution; and
a washing step of washing the solid component with an aqueous liquid.

The dissolving step, the recovery step, and the washing step are carried out in this order. After the dissolving step is completed, a desulfurization step, a phosphorus removal step, and a calcium removal step, which will be described later, are preferably carried out, as necessary.

After the washing step is completed, a step of recovering a solid component containing Li element with increased purity and a step of utilizing the waste washing liquid are preferably carried out.

An example of a method of the present invention will be described below with reference to the flowchart shown in Fig. 1.

As shown in Fig. 1, first, a dissolving step S101 is performed. In the dissolving step S101, an aqueous solution from which Li element is to be recovered (hereinafter also referred to as "aqueous lithium solution") is obtained. This aqueous solution contains a compound containing Li element (hereinafter also referred to as "lithium-containing compound") and an aqueous liquid. In the aqueous lithium solution, Li element may be present mainly in the form of lithium ions (Li⁺).

The lithium-containing compound contains at least Li element, and various lithium-containing compounds may be used without limitation. Examples of the lithium-containing compound include, but are not limited to, oxides, hydroxides, sulfides, salts, and halides containing lithium. For example, the lithium-containing compound used in the present invention is preferably water-soluble. A reason for this is that a water-soluble, lithium-containing compound can provide an aqueous lithium solution containing lithium at a high concentration, from which Li element can be recovered with high purity. Examples of the water-soluble, lithium-containing compound include sulfides containing lithium.

The term "aqueous liquid" herein refers to a liquid (such as a solution, dispersion, or emulsion) containing 5 mass% or more of water. The amount of water contained in the aqueous liquid is preferably 95 mass% or more, more preferably 98 mass% or more, even more preferably 99 mass% or more, and may be 100 mass%. The aqueous liquid used in the dissolving step S101 may be, for example, water, an aqueous solution containing lithium carbonate, or a waste washing liquid, which will be described later. Among them, an aqueous solution containing lithium carbonate is preferably used.

The lithium-containing compound may further contain another element in addition to Li element. Examples of the other element include phosphorus (P) element, sulfur (S) element, and halogen (X) elements. Examples of lithium-containing compounds containing Li, P, S, and X elements include compounds represented by Li₇₋ₓPS₆₋ₓCl_{y}Br_{z} (x is a number satisfying x=y+z and 1.0<x≤1.8, y is a number satisfying 0.3≤y≤1.5, and z is a number satisfying 0.3≤z≤1.5), Li_{7-x-2y}PS_{6-x-y}Clₓ (x is a number satisfying 0.8≤x≤1.7, and y is a number satisfying 0<y≤-0.25x+0.5), Li₇₋ₓPS₆₋ₓXₓ (x is a number satisfying 0.2 to 1.8), Li₂S-P₂S₅-LiX and LiₐPS_{b}X_{c} (X is at least one type of halogen element; a is a number of from 3.0 to 6.0; b is a number of from 3.5 to 4.8; and c is a number of from 0.1 to 3.0).

In the dissolving step S101, the above-described starting materials are provided, and then the lithium-containing compound and the aqueous liquid are mixed to obtain an aqueous lithium solution. The mixing conditions are appropriately selected depending on the types of lithium-containing compound and the aqueous liquid. The mixing may be performed at room temperature or while heating.

The aqueous lithium solution may be, for example, a leachate from a non-standard battery or a leachate from battery scraps. In a case where such a leachate is used as the aqueous lithium solution, a solid electrolyte containing Li element may be recovered from a lithium solid-state battery, for example, and the solid electrolyte may be used as the lithium-containing compound, in the dissolving step S101. The recovery may be performed by removing the negative and positive electrodes from the lithium solid-state battery. The aqueous lithium solution may be obtained by mixing the solid electrolyte with an aqueous liquid. During leaching, treatment with any of various acids or alkalis may be performed, as necessary.

In general, it is preferable to control the Li element concentration in the aqueous lithium solution such that the aqueous lithium solution contains from 2.0 g/L to 31.0 g/L of Li element, in view of balancing the solubility of the lithium-containing compound and the efficiency in the recovery of the Li element.

The aqueous lithium solution may contain another element, such as nonmetal elements and metal elements different from Li element . Examples of such elements include nonmetal elements such as P element, S element, and X elements; and metal elements different from Li element such as cobalt (Co) element, nickel (Ni) element, and manganese (Mn) element. These elements may originate from the lithium-containing compound or the aqueous liquid.

When the aqueous lithium solution contains the other element(s), the aqueous lithium solution typically contains from 10.0 g/L to 220.0 g/L of the other element(s).

If the aqueous lithium solution contains solid matter originating from the battery from which the solid electrolyte was recovered, it is preferable to remove the solid matter, as necessary. For example, the aqueous lithium solution may be subjected to solid-liquid separation by filtration or the like to remove the solid matter.

If the aqueous lithium solution contains S element, an acid is added to the aqueous lithium solution in a desulfurization step S102. The purpose of adding the acid is to convert the S element that may be contained in the aqueous lithium solution into hydrogen sulfide to remove it from the aqueous lithium solution. For this purpose, it is preferable to use an acid having a water solubility at least 50 g/100 g at the liquid temperature at which the desulfurization step S102 is performed. Examples of such acids include various inorganic acids such as hydrogen halides such as hydrofluoric acid, hydrochloric acid, hydrogen bromide, and hydrogen iodide; sulfuric acid, and nitric acid. The hydrogen halides may be used singly or in combination of two or more thereof. Of these acids, it is particularly preferable to use hydrochloric acid, in view of the balance between ease of handling and high solubility.

It is preferable to add an acid to the aqueous lithium solution to adjust the pH of the aqueous lithium solution. This enables efficient removal of the S element in the aqueous lithium solution. From this viewpoint, it is preferable to adjust the pH of the aqueous lithium solution to -1.0 or higher, and more preferably to 0.0 or higher. From the same viewpoint, it is preferable to adjust the pH of the aqueous lithium solution to 2.0 or less, and more preferably to 1.0 or less. The above-mentioned various acids can be used to adjust the pH, and among them, it is particularly preferable to use hydrochloric acid. When adjusting the pH, it is preferable to also adjust the temperature of the aqueous lithium solution. In view of more efficiently removing the S element in the aqueous lithium solution, it is preferable to adjust the temperature of the aqueous lithium solution to 20°C or higher, more preferably to 50°C or higher, and even more preferably to 65°C or higher. From the same viewpoint, it is preferable to adjust the temperature of the aqueous lithium solution to 90°C or lower, more preferably to 80°C or lower, and even more preferably to 75°C or lower.

The amount of acid added to the aqueous lithium solution can be appropriately adjusted such that the pH of the aqueous lithium solution falls within the above range.

If the aqueous lithium solution also contains P element, a compound containing Ca element (hereinafter also referred to as "calcium-containing compound") is added to the aqueous lithium solution in a phosphorus removal step S103. The purpose of adding the calcium-containing compound is to convert the P element that may be contained in the aqueous lithium solution into a solid component containing calcium phosphate to remove it from the aqueous lithium solution. As the calcium-containing compound, it is preferable to use one that is less prone to affect the purity of the solid component containing Li element that is finally recovered. Examples of such calcium-containing compounds include calcium carbonate, and calcium chloride. The calcium-containing compounds may be used singly or in combination of two or more thereof. Of these calcium-containing compounds, it is particularly preferable to use calcium carbonate, in view of ease of handling.

The expression "P element that may be contained in the aqueous lithium solution" as used herein encompasses both the P element originating from the lithium-containing compound and the P element that was originally contained in the aqueous liquid provided in the dissolving step S101. Therefore, this step can be omitted if a lithium-containing compound that does not contain any P element is used, or if an aqueous liquid that does not contain any P element is provided.

It is preferable that the amount of the calcium-containing compound added to the aqueous lithium solution be within a predetermined range. Specifically, in view of reliably removing the P element from the aqueous lithium solution in the phosphorus removal step S103, it is preferable that the Ca element in the calcium-containing compound be 1.5 mol or more per 1 mol of P element in the aqueous lithium solution. Also, in view of recovering Li element with high purity, it is preferable that the Ca element in the calcium-containing compound be 5.0 mol or less, more preferably 4.0 mol or less, and even more preferably 3.5 mol or less, per 1 mol of P element in the aqueous lithium solution.

Prior to adding the calcium-containing compound to the aqueous lithium solution, the temperature of the aqueous lithium solution may be adjusted. This enables efficient removal of the P element in the aqueous lithium solution. From this viewpoint, it is preferable to adjust the temperature of the aqueous lithium solution to 20°C or higher, more preferably to 40°C or higher, and even more preferably to 60°C or higher. From the same viewpoint, it is preferable to adjust the temperature to 85°C or lower, more preferably to 80°C or lower, and even more preferably to 75°C or lower.

The solid component containing calcium phosphate that is produced in the aqueous lithium solution in the phosphorus removal step S103 can be removed, for example, by solid-liquid separation, such as by filtering the aqueous lithium solution.

After the phosphorus removal step S103, a calcium removal step S104 is performed. The aqueous lithium solution after the phosphorus removal step S103 contains Li and Ca elements. In the calcium removal step S104, the pH of the aqueous lithium solution is adjusted. This enables the efficient production of a solid component containing Li in the next step, the recovery step S105, and also enables the conversion of the Ca element that may be contained in the aqueous lithium solution into a solid component containing calcium to remove from the aqueous lithium solution. The Ca element here encompasses both the Ca element contained in the aqueous liquid or lithium-containing compound provided in the dissolving step S101, and the Ca element originating from the calcium-containing compound used in the phosphorus removal step S103. In other words, the purpose of this step is to remove the Ca element in the system. Therefore, this step can be omitted, for example, if the aqueous liquid or the lithium-containing compound do not contain any Ca element, or if the phosphorus removal step S103 is not performed.

In the calcium removal step S104, the pH of the aqueous lithium solution is preferably adjusted to 8.0 or higher, more preferably to 9.0 or higher, and even more preferably to 9.5 or higher. The pH is preferably adjusted to 12.0 or less, more preferably to 11.0 or less, and even more preferably to 10.5 or less. By adjusting the pH to this range, the solid component containing Li element can be efficiently produced in the next step, the recovery step S105, and further, the Ca element contained in the aqueous lithium solution can be converted into a solid component containing calcium to remove from the aqueous lithium solution. Various pH adjusters, such as sodium hydroxide, can be used to adjust the pH. The pH adjuster is appropriately selected depending on the pH of the aqueous lithium solution.

When sodium hydroxide, for example, is used as the pH adjuster, solid components containing calcium hydroxide are produced in the aqueous lithium solution.

When sodium hydroxide is used as the pH adjuster, it is preferable that the amount of the pH adjuster added to the aqueous lithium solution be within a specified range. Specifically, in view of reliably removing the Ca element from the aqueous lithium solution in the calcium removal step S104, it is preferable that the amount of hydroxide ions in the pH adjuster be 2.0 mol or more per 1 mol of Ca element in the aqueous lithium solution. Also, in view of recovering Li element with high purity, it is preferable that the amount of hydroxide ions in the pH adjuster be 3.0 mol or less, more preferably 2.8 mol or less, and even more preferably 2.5 mol or less, per 1 mol of Ca element in the aqueous lithium solution.

The calcium-containing solid components produced in the aqueous lithium solution in the calcium removal step S104 can be removed, for example, by solid-liquid separation, such as by filtering the aqueous lithium solution.

After the calcium removal step S104, the recovery step S105 is performed. The aqueous lithium solution after the calcium removal step S104 contains Li element. In the recovery step S105, a water-soluble carbonate or carbon dioxide gas is added to the aqueous lithium solution. The purpose of adding the water-soluble carbonate or carbon dioxide gas is to convert the Li element contained in the aqueous lithium solution into a solid component containing Li element (hereinafter also referred to as "lithium-containing solid component") to recover it from the aqueous lithium solution. In a case where a water-soluble carbonate is used for this purpose, it is preferable to use a water-soluble carbonate having a water solubility at least 22.0 g/100 g at the liquid temperature at which the recovery step S105 is performed. Examples of such water-soluble carbonates include sodium carbonate. The water-soluble carbonates can be used singly or in combination of two or more thereof. As the water-soluble carbonate used in this recovery step, sodium carbonate is particularly preferable in view of ease of handling and low risk of serving a new source of impurities. When sodium carbonate is used as the water-soluble carbonate, solid components containing lithium carbonate are produced in the aqueous lithium solution.

It is preferable that the amount of the water-soluble carbonate added to the aqueous lithium solution be within a specified range. Specifically, in view of reliably producing a lithium-containing solid component in the aqueous lithium solution in the recovery step S105, it is preferable that the amount of carbonate ions in the water-soluble carbonate be 0.5 mol or more per 1 mol of Li element in the aqueous lithium solution. Also, in view of recovering Li element with high purity, it is preferable that the amount of carbonate ions in the water-soluble carbonate be 1.0 mol or less, more preferably 0.8 mol or less, and even more preferably 0.6 mol or less, per 1 mol of Li element in the aqueous lithium solution.

On the other hand, in a case where carbon dioxide gas is used, it is preferable that the amount of carbon dioxide gas bubbled into the aqueous lithium solution be an amount sufficient to convert the Li element contained in the aqueous lithium solution into a lithium-containing solid component.

When adding a water-soluble carbonate or carbon dioxide gas to the aqueous lithium solution, it is preferable to adjust the temperature of the aqueous lithium solution. This enables efficient production of the lithium-containing solid component in the aqueous lithium solution. From this viewpoint, it is preferable to adjust the temperature of the aqueous lithium solution to, for example, 40°C or higher, more preferably to 50°C or higher, and even more preferably to 60°C or higher. From the same viewpoint, it is preferable to adjust the temperature of the aqueous lithium solution to, for example, 90°C or lower, more preferably to 85°C or lower, and even more preferably to 80°C or lower.

The lithium-containing solid component produced in the aqueous lithium solution in the recovery step S105 can be recovered, for example, by solid-liquid separation, such as by filtering the aqueous lithium solution. In this way, the lithium-containing solid component is concentrated from the aqueous lithium solution. The liquid component resulting from separation of the solid component from the aqueous lithium solution in the recovery step S105 includes, for example, halide ions contained in the aqueous lithium solution provided in the dissolving step S101, halide ions originating from the acid used in the desulfurization step S102, and sodium ions originating from the water-soluble carbonate used in the recovery step S105.

Next, the lithium-containing solid component is washed with an aqueous liquid in a washing step S106. In the washing step S106, the lithium-containing solid component is brought into contact with the aqueous liquid. The type of aqueous liquid is as described above. Upon contact, impurities contained in the lithium-containing solid component are dissolved in the aqueous liquid. The impurities referred to here include, for example, the above-mentioned halide ions and sodium ions. The aqueous liquid containing the impurities is recovered as a waste washing liquid. Through this step, impurities remaining in the lithium-containing solid component can be removed from the lithium-containing solid component to recover Li element with high purity. Details of the aqueous liquid used in the washing step S106 will be described later.

The method for washing the lithium-containing solid component is not particularly limited, and any method known so far can be used. In view of the balance between the ease of the washing process and high washing power, it is preferable to perform repulp washing or to perform washing in a filtration device, in the washing step S106.

In a case where repulp washing is performed, the lithium-containing solid component recovered in the recovery step S105 is added to an aqueous liquid and thus washed in a slurry state. Therefore, the aqueous liquid easily permeates the lithium-containing solid component, so that the entire lithium-containing solid component can be effectively washed.

Washing in a filtration device can be performed, for example, through the following process: the lithium-containing solid component recovered in the recovery step S105 can be put in a filtration device having a discharge function; then an aqueous liquid is allowed to pass through the filtration device to wash the cake; and after washing, the aqueous liquid is discharged from the filtration device by the discharge function. This process, by which the washing step is completed simply by allowing the aqueous liquid to pass through the filtration device, is preferable because it does not require additional equipment such as a repulping tank.

Regardless of whether adopting repulp washing or washing in a filtration device, the lithium-containing solid component can be washed effectively. In view of further reducing the amount of impurities in the lithium-containing solid component, it is preferable to adopt repulp washing.

In the washing step S106, it is preferable to perform washing with an aqueous liquid adjusted to a predetermined temperature, in view of recovering Li element with high purity. Specifically, it is preferable to adjust the temperature of the aqueous liquid during washing to 55°C or higher, more preferably to 60°C or higher, and even more preferably to 65°C or higher. Also, from the same viewpoint, it is preferable to adjust the temperature of the aqueous liquid during washing to 80°C or lower, and more preferably to 75°C or lower.

It is preferable that the lithium-containing solid component be washed thoroughly until the concentration of impurities in the waste washing liquid generated in the washing step reaches a predetermined value or lower. Whether or not the concentration has reached a predetermined value or lower can be determined by measuring the concentration of impurities in the waste washing liquid in an impurity concentration determination step S107 after washing the lithium-containing solid component.

In the impurity concentration determination step S107, the measurement target may be halide ions and/or sodium ions, for example. In the present invention, impurities other than halide ions and sodium ions are sufficiently removed from the aqueous lithium solution through the steps up to the recovery step S105. Therefore, in a case where halide ions and/or sodium ions are the measurement target, it can be determined, from a result that the total concentration of both ions is equal to or less than a predetermined value, that the lithium-containing solid component contains a small amount of impurities, or in other words, that the Li element is concentrated in the lithium-containing solid component. Alternatively, it can also be determined that the Li element is concentrated in the lithium-containing solid component, from a result that the concentrations of the halide ions and the sodium ions are equal to or less than the respective predetermined values.

The concentrations of halide ions and sodium ions in the waste washing liquid can be measured, for example, by the following methods. Specifically, the concentration of halide ions can be measured using inductively coupled plasma atomic emission spectroscopy (ICP-AES) or ion chromatography. The concentration of sodium ions can be measured using atomic absorption spectroscopy or ICP-AES. Alternatively, the qualitative change in the concentrations of halide ions and sodium ions can be observed by the ion electrode method.

In the present invention, washing is preferably performed until the total concentration of halide ions and sodium ions in the waste washing liquid is, for example, 0.100 g/L or less, more preferably 0.070 g/L or less, even more preferably 0.030 g/L or less, and even more preferably 0.010 g/L or less. A lower total concentration of halide ions and sodium ions in the waste washing liquid is more preferable. However, the total concentration may be, for example, 0.005 g/L or more.

The concentration of halide ions in the waste washing liquid is, for example, preferably 0.030 g/L or less, more preferably 0.020 g/L or less, even more preferably 0.010 g/L or less, even more preferably 0.005 g/L or less, and particularly preferably 0.002 g/L or less. A lower concentration of halide ions in the waste washing liquid is more preferable. However, it may be, for example, 0.001 g/L or more. When two or more kinds of halide ions are contained in the waste washing liquid, the "concentration of halide ions in the waste washing liquid" refers to the total concentration of halide ions contained in the waste washing liquid.

The concentration of sodium ions in the waste washing liquid is, for example, preferably 0.050 g/L or less, more preferably 0.010 g/L or less, even more preferably 0.005 g/L or less, and even more preferably 0.002 g/L or less. A lower concentration of sodium ions in the waste washing liquid is more preferable. However, it may be, for example, 0.001 g/L or more.

In the impurity concentration determination step S107, if the concentration as the measurement result is equal to or less than the aforementioned value, it is determined that the lithium-containing solid component in which the Li element is concentrated has been recovered (refined product recovery step S108), and the method of the present invention can be terminated. In the refined product recovery step S108, the waste washing liquid generated by the washing is recovered in addition to the recovery of the lithium-containing solid component. This waste washing liquid can be used in a waste washing liquid utilization step S109 described below. In contrast, if the total concentration as the measurement result exceeds the aforementioned value, it is determined that the lithium-containing solid component contains a large amount of impurities, and the process can returns to the washing step S106 to wash the lithium-containing solid component again. The washing step S106 and the impurity concentration determination step S107 can be repeated any number of times until the measurement result of the concentration in the impurity concentration determination step S107 becomes equal to or less than the aforementioned value. In a case where the washing step S106 is performed multiple times, the time duration for washing the lithium-containing solid component may be different between the multiple washing steps.

In a case where the washing step S106 is performed repeatedly, the step S106 can include n washing stages from the first washing step to the n-th washing step. Here, "n" is a natural number of 2 or greater. In view of achieving a total concentration of halide ions and sodium ions in the waste washing liquid equal to or less than a predetermined value, and in view of concentrating Li element in the lithium-containing solid component, n is typically 2 or greater, and more preferably 3 or greater. The larger the value of n is, the easier it is to pass the check in the impurity concentration determination step S107 However, n may be 5 or less.

The method of the present invention may be characterized in that it includes the step of washing the lithium-containing solid component and the step of utilizing the waste washing liquid.

When recovering Li element from waste lithium solid-state batteries or non-standard materials, the purity of Li element is required to be at least a certain value in order to reuse the Li element as one of the starting materials of solid electrolyte. Although the method described in Patent Literature 1 has been reported as a method for recovering Li element, the recovered Li element-concentrating operation is insufficient in the method described in the same document, and therefore Li element with a purity suitable for reuse cannot be obtained unfortunately. In contrast, as described above, the method of the present invention, which includes the step of washing the lithium-containing solid component with an aqueous liquid, can increase the purity of Li element in the lithium-containing solid component, so that Li element with a high purity suitable for reuse as one of the starting materials of solid electrolyte can be recovered. Furthermore, as described below, the method of the present invention includes a waste washing liquid utilization step S109, in which the waste washing liquid generated in the washing step is utilized, so that Li element that has unintentionally flowed out into the waste washing liquid can be recovered to obtain Li element with a higher yield.

In the waste washing liquid utilization step S109, first, the concentration of impurities in the waste washing liquid is measured. The measurement targets are, for example, halide ions and/or sodium ions, as in the impurity concentration determination step S107. If the waste washing liquid contains an excessive amount of impurities, the impurities may circulate through the steps of the present invention to allow the impurities to unintentionally accumulate in the lithium-containing solid component. Therefore, in view of recovering Li element with a high yield, it is preferable to measure the concentration of impurities in the waste washing liquid and selectively utilize the waste washing liquid whose concentration as the measurement result is equal to or less than a predetermined value. For this reason, the total concentration of halide ions and sodium ions in the waste washing liquid generated in the waste washing liquid utilization step S109 is, for example, preferably 10.0 g/L or less, more preferably 1.0 g/L or less, and even more preferably 0.1 g/L or less. When the waste washing liquid is used in the final washing step S106, it is particularly preferable that the total concentration of halide ions and sodium ions in the waste washing liquid be, for example, 0.1 g/L or less.

If it is confirmed that the concentration of impurities in the waste washing liquid is equal to or less than a predetermined value, the waste washing liquid can be used in a step prior to the waste washing liquid utilization step S109. The method of the present invention may include a plurality of steps for removing impurities that may be contained in the aqueous lithium solution and the lithium-containing solid component. The washing step S106, in which the waste washing liquid is generated, is downstream of the step(s) for removing impurities. Therefore, performing the step of utilizing the waste washing liquid in the manner described above is preferable in view of preventing inhibition of concentration of Li element in the lithium-containing solid component caused by impurities that may be contained in the waste washing liquid. Furthermore, it is also preferable that the use of the waste washing liquid make it possible to recover Li element that has unintentionally flowed into the waste washing liquid.

If the concentration of impurities in the waste washing liquid exceeds a predetermined value, the waste washing liquid may be discarded without being returned to the system (disposal step S110).

The waste washing liquid utilization step S109, in which the waste washing liquid is utilized, will be described below by way of an example in which the washing step consists of n washing stages. As described above, in a case where the washing step S106 includes the first washing step to the n-th washing step, the waste washing liquid generated in the first washing step can be used as the aqueous liquid to be mixed with the lithium-containing compound in the dissolving step S101. By using the waste washing liquid in the dissolving step S101, Li element that has unintentionally flowed out into the waste washing liquid can be recovered during the series of steps from the step S101 to the refined product recovery step S108.

The waste washing liquid that can be used in the dissolving step S101 is not limited to the waste washing liquid generated in the first washing step. Not only the waste washing liquid generated in the first washing step, but also the waste washing liquid generated in the p-th washing step can be used as the aqueous liquid to be mixed with the lithium-containing compound in the dissolving step S101. Here, "p" is a natural number of from 2 to n. The value of p can be any value, provided that the value satisfies the relationship with the value of n.

The step in which a waste washing liquid is utilized is not limited to the dissolving step S101. For example, the waste washing liquid generated in the p-th washing step can be used in the washing step S106 for the lithium-containing solid component in the (p-m)-th washing step. Here, "m" is a natural number equal to or greater than 1, and less than p. The value of m can be any value, provided that the value satisfies the relationship with the value of p. In the method of the present invention, Li element that has unintentionally flowed out into the waste washing liquid can be more effectively recovered by utilizing a waste washing liquid in the washing step S106 in addition to the dissolving step S101.

For these reasons, in the method of the present invention, the waste washing liquid generated in the p-th washing step may be used as the aqueous liquid to be mixed with the lithium-containing compound in the dissolving step S101, or may be used to wash the lithium-containing solid component in the (p-m)-th washing step S106. Either case is preferable because it is possible in either case to prevent the Li element from unintentionally escaping from the steps of the method of the present invention and to effectively recover the Li element.

Thus, the lithium-containing solid component, i.e., the solid component containing Li element, is recovered with high purity. The solid component obtained can be utilized as a solid electrolyte itself or as one of the starting materials for a solid electrolyte, either as-is or after being converted into a halide such as lithium chloride or lithium bromide, or a sulfide such as lithium sulfide.

The present invention has been described above based on preferred embodiments, but the present invention is not limited to the foregoing embodiments.

In relation to the foregoing embodiments, the following method for recovering lithium, method for producing a lithium-containing solid component, and method for recovering lithium element are further disclosed.
[1] A method for recovering lithium, comprising:
   a dissolving step of mixing a compound containing lithium (Li) element and an aqueous liquid to obtain an aqueous lithium solution;
   a recovery step of recovering a solid component containing lithium (Li) element from the aqueous lithium solution; and
   a washing step of washing the solid component with an aqueous liquid.
[2] The method for recovering lithium as set forth in clause [1], wherein the washing step comprises n washing stages from a first washing step to an n-th washing step (where n is a natural number of 2 or greater).
[3] The method for recovering lithium as set forth in clause [2], wherein a waste washing liquid generated in the first washing step is used as the aqueous liquid to be mixed with the compound in the dissolving step.
[4] The method for recovering lithium as set forth in clause [2] or [3], wherein a waste washing liquid generated in a p-th washing step is used as the aqueous liquid to be mixed with the compound in the dissolving step, or used to wash the solid component in a (p-m)-th washing step (where p is a natural number of from 2 to n; and m is a natural number of 1 or greater, and less than p).
[5] The method for recovering lithium as set forth in any one of clauses [1] to [4], wherein the washing step is a step of performing repulp washing or a step of performing washing in a filtration device.
[6] The method for recovering lithium as set forth in any one of clauses [1] to [5], wherein the washing is performed until a total concentration of halide ions and sodium ions in a waste washing liquid generated in the washing step becomes 0.100 g/L or less.
[7] The method for recovering lithium as set forth in any one of clauses [1] to [6], wherein the compound further contains phosphorus (P) element.
[8] The method for recovering lithium as set forth in clause [7], further comprising:
   after the dissolving step,
      a phosphorus removal step of adding calcium carbonate to the aqueous lithium solution to produce a solid component containing calcium phosphate in the aqueous lithium solution and removing the solid component containing calcium phosphate from the aqueous lithium solution, and
   after the phosphorus removal step,
      a calcium removal step of adjusting a pH of the aqueous lithium solution to produce a solid component containing calcium in the aqueous lithium solution and removing the solid component containing calcium from the aqueous lithium solution,
   wherein after the calcium removal step, the recovery step is performed.
[9] The method for recovering lithium as set forth in any one of clauses [1] to [8], wherein the recovery step is a step of adding a water-soluble carbonate to the aqueous lithium solution to produce a solid component containing lithium carbonate in the aqueous lithium solution and recovering the solid component containing lithium carbonate from the aqueous lithium solution.
[10] A method for producing a solid component containing lithium, comprising:
   a dissolving step of mixing a compound containing lithium (Li) element and an aqueous liquid to obtain an aqueous lithium solution;
   a recovery step of recovering a solid component containing lithium (Li) element from the aqueous lithium solution; and
   a washing step of washing the solid component with an aqueous liquid.
[11] A method for recovering lithium element, comprising:
   a step of recovering a solid electrolyte containing lithium (Li) element from a lithium solid-state battery;
   a dissolving step of mixing the solid electrolyte and an aqueous liquid to obtain an aqueous lithium solution;
   a recovery step of recovering a solid component containing lithium (Li) element from the aqueous lithium solution; and
   a washing step of washing the solid component with an aqueous liquid.

### Examples

The present invention will be described in more detail below by way of Examples. However, the scope of the present invention is not limited to these Examples. Unless otherwise specified, "%" means "% by mass."

### [Example 1]

### (1) Dissolving Step S101

10.0 g of Li_{5.4}PS_{4.4}Cl_{0.4}Br_{0.6} was mixed with 100 mL of a 0.14 mol/L aqueous lithium carbonate solution simulating a waste washing liquid, to prepare an aqueous lithium solution.

### (2) Desulfurization Step S102

15 mL of 12 mol/L hydrochloric acid was added to the aqueous lithium solution, to adjust the pH of the aqueous lithium solution to 1 or less. Next, the temperature of the aqueous lithium solution was adjusted to 70°C to produce hydrogen sulfide and remove the S element from the solution.

### (3) Phosphorus Removal Step S103

0.12 mol of calcium carbonate was added to the aqueous lithium solution, to cause precipitation of calcium phosphate in the aqueous lithium solution, and the precipitated calcium phosphate was removed from the aqueous lithium solution using a Nutsche filter.

### (4) Calcium Removal Step S104

0.2 mol of solid sodium hydroxide was added to the aqueous lithium solution, to adjust the pH of the aqueous lithium solution to 10.0, thereby causing precipitation of calcium hydroxide in the aqueous lithium solution. The precipitated calcium hydroxide was removed from the aqueous lithium solution using a Nutsche filter.

### (5) Recovery Step S105

0.14 mol of sodium carbonate was added to the aqueous lithium solution adjusted to 70°C, to cause precipitation of lithium carbonate in the aqueous lithium solution. The precipitated lithium carbonate was recovered from the aqueous lithium solution using a Nutsche filter.

### (6) Washing Step S106

The lithium carbonate was repulp-washed with 100 mL of a saturated aqueous lithium carbonate solution at a liquid temperature of 70°C.

### (7) Impurity Concentration Determination Step S107

A portion of the waste washing liquid generated in the washing step S106 was collected, and the chloride ion concentration, bromide ion concentration, and sodium ion concentration in the waste washing liquid were measured. The measurements were performed by a calibration curve method using an ICP-AES analyzer (model: SPS3500DD) manufactured by Hitachi High-Tech Science Corporation. The measurement results are shown in Table 1 below.

### (8) Refined Product Recovery Step S108

The lithium carbonate washed in the washing step S106 was recovered using a Nutsche filter.

### [Example 2]

The dissolving step S101 to the recovery step S105 were performed in the same manner as in Example 1. In the washing step S106, repulp washing of lithium carbonate was performed in two stages with a saturated aqueous lithium carbonate solution at a liquid temperature of 70°C. In each of the two washing stages, a fresh saturated aqueous lithium carbonate solution was used.

Then, the impurity concentration determination step S107 and the refined product recovery step S108 were performed in the same manner as in Example 1, to obtain lithium carbonate.

### [Example 3]

The dissolving step S101 to the recovery step S105 were performed in the same manner as in Example 1. In the washing step S106, repulp washing of lithium carbonate was performed in three stages with a saturated aqueous lithium carbonate solution at a liquid temperature of 60°C. In each of the three washing stages, a fresh saturated aqueous lithium carbonate solution was used.

Then, the impurity concentration determination step S107 and the refined product recovery step S108 were performed in the same manner as in Example 1, to obtain lithium carbonate.

**[Table 1]**

| | Reference* | Example 1 | Example 2 | Example 3 |
|---|---|---|---|---|
| Chloride ion concentration (g/L) | 47 | 0.82 | 0.02 | < 0.01 |
| Bromide ion concentration (g/L) | 14 | 0.25 | < 0.01 | < 0.01 |
| Sodium ion concentration (g/L) | 83 | 1.7 | 0.04 | < 0.01 |

| | | | | |
|---|---|---|---|---|
| *Ion concentrations of filtrate obtained by solid-liquid separation after adding sodium carbonate in Step S105 in Example 1. | | | | |

As is clear from the results shown in Table 1, the washing of lithium carbonate reduces the chloride ion concentration, bromide ion concentration, and sodium ion concentration in the waste washing liquid. Low concentrations of these ions in the waste washing liquid mean that the purity of the obtained lithium carbonate is high. Therefore, it can be understood that the washing of lithium carbonate increases the purity of the lithium carbonate. It can also be understood that repeating the washing step further increases the purity of the lithium carbonate.

### Industrial Applicability

The present invention provides a method for recovering lithium element with high purity from a lithium-containing compound.

## Claims

1. A method for recovering lithium, comprising:
a dissolving step of mixing a compound containing lithium (Li) element and an aqueous liquid to obtain an aqueous lithium solution;
a recovery step of recovering a solid component containing lithium (Li) element from the aqueous lithium solution; and
a washing step of washing the solid component with an aqueous liquid.

2. The method for recovering lithium according to claim 1, wherein the washing step comprises n washing stages from a first washing step to an n-th washing step (where n is a natural number of 2 or greater).

3. The method for recovering lithium according to claim 2, wherein a waste washing liquid generated in the first washing step is used as the aqueous liquid to be mixed with the compound in the dissolving step.

4. The method for recovering lithium according to claim 2, wherein a waste washing liquid generated in a p-th washing step is used as the aqueous liquid to be mixed with the compound in the dissolving step, or used to wash the solid component in a (p-m)-th washing step (where p is a natural number of from 2 to n; and m is a natural number of 1 or greater, and less than p).

5. The method for recovering lithium according to claim 1, wherein the washing step is a step of performing repulp washing or a step of performing washing in a filtration device.

6. The method for recovering lithium according to claim 1, wherein the washing is performed until a total concentration of halide ions and sodium ions in a waste washing liquid generated in the washing step becomes 0.100 g/L or less.

7. The method for recovering lithium according to claim 1, wherein the compound further contains phosphorus (P) element.

8. The method for recovering lithium according to claim 7, further comprising:
after the dissolving step,
a phosphorus removal step of adding calcium carbonate to the aqueous lithium solution to produce a solid component containing calcium phosphate in the aqueous lithium solution and removing the solid component containing calcium phosphate from the aqueous lithium solution; and
after the phosphorus removal step,
a calcium removal step of adjusting a pH of the aqueous lithium solution to produce a solid component containing calcium in the aqueous lithium solution and removing the solid component containing calcium from the aqueous lithium solution;
wherein after the calcium removal step, the recovery step is performed.

9. The method for recovering lithium according to claim 1, wherein the recovery step is a step of adding a water-soluble carbonate to the aqueous lithium solution to produce a solid component containing lithium carbonate in the aqueous lithium solution and recovering the solid component containing lithium carbonate from the aqueous lithium solution.

10. A method for producing a solid component containing lithium, comprising:
a dissolving step of mixing a compound containing lithium (Li) element and an aqueous liquid to obtain an aqueous lithium solution;
a recovery step of recovering a solid component containing lithium (Li) element from the aqueous lithium solution; and
a washing step of washing the solid component with an aqueous liquid.

11. A method for recovering lithium element, comprising:
a step of recovering a solid electrolyte containing lithium (Li) element from a lithium solid-state battery;
a dissolving step of mixing the solid electrolyte and an aqueous liquid to obtain an aqueous lithium solution;
a recovery step of recovering a solid component containing lithium (Li) element from the aqueous lithium solution; and
a washing step of washing the solid component with an aqueous liquid.
